# EUROPÄISCHE PATENTSCHRIFT

(11) **EP 2 486 373 B1**
(45) Veröffentlichungstag und Bekanntmachung des Hinweises auf die Patenterteilung: **04.01.2017**
(21) Anmeldenummer: 10767938.3
(22) Anmeldetag: 08.10.2010
(51) Int. Cl.: G01D 5/347, B62D 15/02, G01D 5/244

(54) **POSITIONSGEBER MIT MULTITURN-POSITIONSERFASSUNG**
Locator with multi-turn positioning
Indicateur de position doté d'une détermination de position à rotation multiple

(30) Priorität: 09.10.2009 EP 09012831; 09.10.2009 EP 09012832
(43) Veröffentlichungstag der Anmeldung: 15.08.2012
(73) Patentinhaber: Baumer IVO GmbH & Co. KG, 78056 Villingen-Schwenningen (DE)
(72) Erfinder: JAHNKE, Siegfried, CH-8500 Frauenfeld (CH); RAPP, Günter, 78647 Trossingen (DE); SCHNEIDER, Michael, 78462 Konstanz (DE); HILLER, Bernhard, 13465 Berlin (DE)
(74) Vertreter: Strauss, Steffen
(86) Internationale Anmeldenummer: PCT/EP2010/006144
(87) Internationale Veröffentlichungsnummer: WO 2011/042190

(56) Entgegenhaltungen:
- EP-A1- 2 309 232
- EP-A2- 1 571 426
- DE-A1- 10 210 363
- DE-A1-102004 062 448
- DE-A1-102005 009 489
- DE-A1-102006 014 700
- DE-A1-102008 047 109
- DE-B3- 10 311 412

## Beschreibung

### Gebiet der Erfindung

Die vorliegende Erfindung betrifft einen Positionsgeber zur Erfassung der Position einer um eine Rotationsachse drehbaren Welle.

### Stand der Technik

Positionsgebervorrichtungen finden allgemein zur Überwachung und Steuerung mechanischer Bewegungsabläufe Anwendung. Beispielsweise werden Positionsgeber für die Drehzahlerfassung und Steuerung von Motoren eingesetzt. Positionsgeber zur Bestimmung von Winkelpositionen durch berührungslose Single- oder Multiturn-Abtastung einer drehbaren Welle sind in verschiedenen Ausführungen bekannt.

Die Druckschrift EP 0550794 beschreibt einen Positionsgeber zur Absolutwertpositionserfassung einer drehbaren Welle, mit einer ersten Sensoranordnung und einer ersten Auswerteeinheit zur Erfassung und Auswertung der genauen, eindeutigen absoluten Position der Welle während einer vollständigen Umdrehung, aus einer sich über eine Umdrehung nicht wiederholenden und daher eindeutig kodierten Codierscheibe, d.h. der Singleturn-Position, sowie mit einer zweiten Sensoranordnung und einer zweiten Auswerteeinheit zur Erfassung und Auswertung der ganzzahligen Anzahl und/oder eines Teils der vollständig durchlaufenen Umdrehungen der Welle, d.h. der Multiturn-Position. Zusätzlich ist eine dritte Auswerteeinheit vorgesehen zur Bildung eines Gesamtabsolutwerts aus dem Singleturn- und aus dem Multiturn-Positionswert und zur Ausgabe dieses Gesamtabsolutwerts an ein übergeordnetes System.

Die Erfassung der Singleturn-Position erfolgt dabei optisch, d.h. eine mit der Welle verbundene Maßverkörperung beeinflusst abhängig von deren Position die Signale einer Anordnung von Photodioden, die von einer LED beleuchtet werden. Die Erfassung der Multiturn-Position erfolgt dagegen magnetisch, d.h. eine mit der Welle verbundene Maßverkörperung beeinflusst abhängig von deren Position die Signale magnetischer Schaltelemente. Bei Abschalten oder Ausfall der externen Spannungsversorgung des Positionsgebers wird die Erfassung der Singleturn-Position abgeschaltet. Die Versorgung der Multi-turn-Erfassung wird weiter aufrecht erhalten, gespeist von einer Batterie im Positionsgeber. Zur Begrenzung des Energieverbrauchs sind die Schaltelemente in Reihe mit einem sehr hochohmigen Widerstand geschaltet, sind aber permanent bestromt. Das Ein- und Ausschalten der Schaltelemente erfolgt abhängig von der Position.

Aus der EP 1 279 932 ist ein Multiturn-Drehgeber für das Lenkrad eines Kraftfahrzeuges bekannt, bei dem über ein Schrittgetriebe bei jeder vollen Umdrehung einer Eingangswelle eine Indexscheibe mit einer Abdeckplatte entsprechend der Drehrichtung um einen vorbestimmten Winkelschritt vor- oder zurückgedreht wird. Die Lage der Abdeckplatte wird optisch über einen begrenzten Winkelbereich erfasst.

Die EP 0 911 610 zeigt einen Absolutwert-Drehgeber, bei dem über einen Matrixsensor ein Drehwinkel abhängiges Pixelmuster optisch erfasst wird. Der Drehgeber ist zusätzlich mit einem Umdrehungszähler versehen, der bei jeder vollen Umdrehung in Abhängigkeit von der Drehrichtung schrittweise von einem Getriebe vor- oder zurückgeschaltet wird. Am Außenumfang des Umdrehungszählers ist eine optische Markierung angebracht, die ebenfalls von dem Matrixsensor abgetastet wird. Der Sensor kann die Absolutlage nur über einen begrenzten Drehwinkelbereich erfassen, da der Ausschlag des Umdrehungszählers wie bei der EP 1 279 932 begrenzt ist.

Ein weiterer Absolutgeber mit einer optischen Erfassung der Absolutlage ist aus der EP 0 502 534 bekannt. Die Umdrehungen werden mit Hilfe zweier optischer Spuren von einer Einrichtung zur Bestimmung des Absolutwertes gezählt.

Die Druckschrift EP 1 462 771 beschreibt einen weiteren Positionsgeber. Die Erfassung der Singleturn-Position erfolgt magnetisch über einen zentral auf der Drehachse fixierten Permanentmagnet und eine drehfeste magnetische Sensoranordnung. Die Erfassung der Multiturn-Position erfolgt ebenfalls magnetisch. Zur Reduktion des Energieverbrauchs werden die Sensorteile durch die Auswerteeinheit nur periodisch für die Zeit der Messung mit Strom/Spannung beaufschlagt. Die Auswertung wird von einem Mikrocontroller übernommen. Dieser Mikrocontroller wird während der Pausen zwischen den Abtastungen in einem Stromspar-Mode mit verringerter Taktfrequenz und abgeschalteter Peripherie betrieben.

DE 10311412 beschreibt ein Verfahren zur Messung und Bestimmung der absoluten Position einer Geberwelle durch eine Auswerteeinheit zur Erfassung und Auswertung der Position und der Anzahl der vollständigen durchlaufenen Umdrehungen, mit einem drehfest gehaltenen ersten Sensorteil und einem an der Geberwelle angeordneten, mit dieser rotierenden zweiten Sensorteil, wobei zumindest ein Sensorteil von einer Energiequelle versorgt wird, wobei die Sensorteile durch die Auswerteeinheit nur periodisch für die Zeit der Messung mit Strom/Spannung beaufschlagt werden.

EP 1 571 426 und EP 2309232 offenbaren weitere gattungsgemäße Positionsgeber.

Aus den obigen Druckschriften ergibt sich, dass sich die Position einer Welle bevorzugt aus einer Singleturn-Position und einer Multiturn-Position zusammensetzt. Die Singleturn-Position entspricht der Position der Welle innerhalb einer vollen Umdrehung und kann beispielsweise zwischen einschließlich 0° und ausschließlich 360° betragen. Die Multiturn-Position gibt die Anzahl der vollen Umdrehungen an, wobei das Vorzeichen der Drehrichtung berücksichtigt sein kann. Die Absolutwert-Drehgeber zeichnen sich dadurch aus, dass wenigstens die Singleturn-Position, vorzugsweise auch die Multiturn-Position - dann werden die Absolutwert-Drehgeber als Multiturn-Absolutwertgeber bezeichnet -, der Welle mit dem Einschalten des Drehgeberse zur Verfügung steht.

Durch das magnetische Prinzip der Multiturn-Erfassung der aus dem Stand der Technik bekannten Positionsgebervorrichtungen ergeben sich jedoch erhebliche Nachteile, wenn ein solcher Positionsgeber in der Nähe einer Magnetbremse eingesetzt wird und das Einkoppeln eines Magnetfelds in die Schaltelemente zu fehlerhaften Schaltimpulsen führt.

### Beschreibung der Erfindung

Der vorliegenden Erfindung liegt gegenüber dem Stand der Technik die Aufgabe zugrunde, einen gegen äussere Magnetfelder unempfindlichen Positionsgeber zu realisieren. In Weiterentwicklungen der Erfindung soll durch einen optimierten Aufbau und einen optimalen Betrieb der Sensoranordnungen sowie der Erfassungs- und Auswerteelektronik eine möglichst kompakte und kostengünstige Bauform sowie eine möglichst lange Lebensdauer erreicht werden.

Die oben genannte Aufgabe wird durch einen Positionsgeber gemäß Anspruch 1 gelöst.

Die beanspruchte Erfindung betrifft einen Positionsgeber zur Erfassung der Position einer um eine Rotationsachse drehbaren Welle, mit einer Leuchteinrichtung und einer optischen Sensoranordnung zur Erfassung der Multiturn-Position der Welle, wobei der Positionsgeber wenigstens einen Energiesparmodus bei Abschalten oder Ausfall der externen Spannungsversorgung umfasst und ausgestaltet ist, im Energiesparmodus die Leuchteinrichtung zeitweise mit Spannung zu versorgen.

Zur Verringerung des Energieverbrauchs, ist es vorgesehen, dass die Betriebsart der Multiturn-Positionserfassung bei Abschalten oder Ausfall der externen Spannungsversorgung angepasst wird, d.h. dass beispielsweise nur Impulsmessungen (also im Vergleich zur Umlaufperiode kurzzeitige Messungen) vorgenommen werden. Zusätzlich kann vorgesehen sein, dass die Singleturn-Positionserfassung teilweise oder vollständig abgeschaltet wird.

In einer Weiterbildung kann der Positionsgeber eine erste optische Sensoranordnung zur Erfassung der Singleturn-Position der Welle, und eine zweite optische Sensoranordnung zur Erfassung, insbesondere zur getriebelosen Erfassung, der Multiturn-Position der Welle umfassen.

Die erste und die zweite optische Sensoranordnung umfassen dabei bevorzugt lichtempfindlichen Elemente wie beispielsweise Fotodioden oder Fototransistoren. Die Erfassung der Multiturn-Position erfolgt somit ebenfalls optisch. Dies ermöglicht eine vollkommene Unempfindlichkeit der Positionserfassung gegen magnetische Felder.

In einer anderen Weiterbildung kann der Positionsgeber eine optische Sensoranordnung mit mehreren Sensorelementen umfassen, in welcher die mehreren Sensorelemente zur Erfassung der Singleturn-Position der Welle vorgesehen sind, und wobei ein Teil der mehreren Sensorelemente zur Erfassung, insbesondere zur getriebelosen Erfassung, der Multiturn-Position der Welle vorgesehen ist.

Die optische Sensoranordnung mit den mehreren Sensorelementen umfasst dabei bevorzugt lichtempfindliche Elemente wie beispielsweise Fotodioden oder Fototransistoren. Die Erfassung der Multiturn-Position erfolgt somit ebenfalls optisch. Dies ermöglicht eine vollkommene Unempfindlichkeit der Positionserfassung gegen magnetische Felder. Für die Erfassung der Singleturn-Position werden sämtliche der mehreren Sensorelemente verwendet, während lediglich ein Teil der mehreren Sensorelemente auch für die Erfassung der Multiturn-Position verwendet wird.

In einer Weiterbildung des zuvor beschriebenen Positionsgebers können auch alle der mehreren Sensorelemente zur Erfassung, insbesondere zur getriebelosen Erfassung, der Multiturn-Position der Welle vorgesehen sein. Hierdurch lässt sich die Genauigkeit und Zuverlässigkeit der Messung erhöhen.

In einer anderen Weiterbildung kann ein weiterer Teil der mehreren Sensorelemente zur Erfassung mindestens einer weiteren Multiturn-Position der Welle vorgesehen sein, und es kann ein Abgleich der Multiturn-Position und der mindestens einen weiteren Multiturn-Position erfolgen. Dadurch kann ein Datenabgleich mit Diagnosemöglichkeit zur Verfügung gestellt werden.

In einer Weiterbildung kann der erfindungsgemäße Positionsgeber weiterhin eine Leuchteinrichtung umfassen, insbesondere eine Leuchtdiodenanordnung mit wenigstens einer Leuchtdiode. Die Leuchtdiodenanordnung kann dabei beispielweise genau eine Leuchtdiode aufweisen, deren Licht von beiden Sensoranordnungen erfasst wird. In einer anderen Ausführung können jeweils eine oder mehrere Leuchtdioden für die jeweiligen Sensoranordnungen vorgesehen sein.

In einer anderen Weiterbildung kann der Positionsgeber weiterhin wenigstens eine, insbesondere genau eine, mit der Welle verbundene Maßverkörperung umfassen. Die mit der drehbaren Welle fest verbundene Maßverkörperung kann Mittel für die Singleturn-Erfassung als auch zusätzlich Mittel für die Multiturn-Erfassung beinhalten. Auf diese Weise wird keine separate Maßverkörperung für die Multiturn-Erfassung mehr benötigt, was wiederum die Anzahl der Teile reduziert und die Lebensdauer und Kompaktheit des Positionsgebers erhöht.

In einer anderen Weiterbildung kann die wenigstens eine mit der Welle verbundene Maßverkörperung eine erste Maßverkörperung und eine zweite Maßverkörperung umfassen, wobei die erste Maßverkörperung zur Erfassung der Singleturn-Position und die zweite Maßverkörperung zur Erfassung der Multiturn-Position geeignet ist. Auf diese Weise kann die zweite Maßverkörperung beispielsweise als einfache Unterbrecherscheibe für eine separate Leuchtdiodenanordnung für die Multiturn-Erfassung ausgebildet sein.

In einer anderen Weiterbildung kann die wenigstens eine Maßverkörperung eine Ausgestaltung aufweisen, die den Lichtweg zur zweiten optischen Sensoranordnung bzw. dem Teil der mehreren Sensorelemente entsprechend eines Teils einer ganzen Umdrehung unterbricht. Auf diese Weise ist eine Multiturn-Position beispielsweise gequantelt in viertel, halben oder ganzen Umdrehungen erfassbar.

Eine andere Weiterbildung besteht darin, dass der Positionsgeber eine erste Auswerteeinheit zur Auswertung der Singleturn-Position, eine zweite Auswerteeinheit zur Auswertung der Multiturn-Position und eine Steuer-/Auswerteinheit, insbesondere einen Mikrocontroller, zur Weiterverarbeitung der Singleturn-Position und der Multiturn-Position umfasst. Damit kann eine Vorverarbeitung der Signale von der ersten und der zweiten optischen Sensoranordnung in der ersten bzw. zweiten Auswerteeinheit erfolgen, und die Berechnung eines Gesamtabsolutwerts kann dann in der Steuer-/Auswerteeinheit erfolgen. Der Gesamtabsolutwert bzw. absolute Positionswert wird beispielsweise durch Kombinieren und/oder Zusammensetzen der Singleturn- und Multiturn-Position berechnet. Diese Berechnung kann bereits unmittelbar nach dem Einschalten der Versorgungsspannung des Positionsgebers stattfinden.

In einer anderen Weiterbildung kann der Positionsgeber wenigstens zwei Betriebsmodi aufweisen, wobei die wenigstens zwei Betriebsmodi einen Normalmodus bei Anliegen einer externen Spannungsversorgung und einen Energiesparmodus bei Abschalten oder Ausfall der externen Spannungsversorgung umfassen.

Vorteilhafterweise kann der Positionsgeber ferner so ausgebildet sein, dass im Energiesparmodus die Erfassung der Multiturn-Position lediglich mit der zweiten optischen Sensoranordnung durchgeführt wird und/oder dass im Energiesparmodus die erste optische Sensoranordnung und/oder die erste Auswerteeinheit abgeschaltet ist.

Gemäß einer weiteren vorteilhaften Ausführung kann alternativ oder kumulativ im Normalmodus die Multiturn-Position zusätzlich über die erste Sensoranordnung ermittelbar sein. Insbesondere kann die Multiturn-Position mit der ersten Sensoranordnung und der zweiten Sensoranordnung ermittelbar sein und ein Abgleich der beiden ermittelten Position vorgenommen werden.

Durch die beiden zuvor genannten Weiterbildungen kann die Umdrehungserfassung auf die Zeit ohne externe Spannungsversorgung begrenzt werden und in der Zeit mit externer Spannungsversorgung von der Positionserfassung innerhalb einer Umdrehung mit übernommen werden, wobei ein ständiger Datenabgleich mit Diagnosemöglichkeit gegeben ist.

In einer anderen Weiterbildung kann der Positionsgeber weiterhin eine Energiequelle, insbesondere in Form einer Batterie oder in Form eines Akkumulators, umfassen.

Hierdurch kann zum einen im Energiesparmodus die zweite Sensoranordnung und/oder die Leuchteinrichtung zumindest zeitweise mit Spannung versorgbar sein. Da z.B. die Fotodioden der optischen Sensoranordnung einen vernachlässigbaren Energieverbrauch besitzen, ist es vorzugsweise vorgesehen, diese permanent mit Strom/Spannung zu beaufschlagen.

Zum anderen kann, falls eine derartige Energiequelle vorgesehen ist, eine Einrichtung zur Überwachung der externen Spannungsversorgung und zum Umschalten der Energieversorgung des Positionsgebers bei Abschalten oder Ausfall der externen Energieversorgung auf die Spannungsquelle vorgesehen werden.

Erfindungsgemäß ist der Positionsgeber so ausgebildet, dass im Energiesparmodus die Leuchteinrichtung zumindest zeitweise mit Spannung versorgbar ist, insbesondere, dass im Falle von mehreren Leuchtdioden im Energiesparmodus wenigstens ein Teil der mehreren Leuchtdioden zumindest zeitweise mit Spannung versorgbar ist.

Zu einer effizienten Verringerung des Energieverbrauchs ist es vielmehr zweckmäßig, den Betrieb des eigentlichen Aktors mit hohem Energieverbrauch, d.h. den Betrieb der Leuchteinrichtung (z.B. LED) in Abhängigkeit vom Betriebszustand mit einer variablen Einschaltdauer, wie beispielsweise periodisch oder gepulst mit einer variablen Frequenz, zu betreiben. Im Gegensatz zum Stand der Technik erfolgt hier also nicht ein periodischer Betrieb des Sensors, sondern des Aktors.

Eine andere Weiterbildung besteht darin, dass die zweite optische Sensoranordnung zeitlich konstant und/oder die Leuchteinrichtung zeitlich variabel, insbesondere periodisch oder gepulst mit einer variablen Frequenz, mit Spannung versorgbar sein können.

In einer anderen Weiterbildung kann der Positionsgeber weiterhin eine Bewegungsmesseinrichtung umfassen, mit der die Geschwindigkeit und/oder die Beschleunigung der Welle messbar ist, um in Abhängigkeit von der Messung die zeitlich variable Spannungsversorgung der Leuchteinrichtung, insbesondere Frequenz, und/oder Häufigkeit und/oder Dauer der Spannungsversorgung, vorzunehmen. Zusätzlich können mehrere Betriebsarten bzw. mehrere Betriebsfrequenzen für die Ansteuerung der LED vorgesehen sein. Auf diese Weise kann ein besonders vorteilhafter Energiesparmodus realisiert werden, da sich die Welle bei Abschalten oder Ausfall der externen Spannungsversorgung normalerweise nicht oder nur mit kleiner Geschwindigkeit und Beschleunigung dreht.

Eine andere Weiterbildung besteht darin, dass die Steuer- und Auswerteinheit dazu ausgebildet sein kann, die zeitlich variable Spannungsversorgung der Leuchteinrichtung vorzunehmen.

Zur Erfassung der Multiturn-Position ist nicht es erforderlich, dass die Leuchteinrichtung und/oder Sensoranordnung permanent im Konstantlicht- oder Blinkmodus betrieben werden. Nach der Erfindung ist folglich vorgesehen, die Leuchteinrichtung zeitlich begrenzt, bevorzugt in Abhängigkeit von der Position der Welle, mit Energie zu versorgen. Dies hat den Vorteil, dass der Energieverbrauch im Energiesparmodus insbesondere in den Fällen deutlich herabgesetzt ist, in denen sich der Absolutgeber kontinuierlich, gegebenenfalls auch mit hoher Geschwindigkeit, weiterdreht. Bei einer von der Drehgeschwindigkeit abhängigen Pulsrate kann sich nämlich eine Batterie oder ein Akkumulator überraschend schnell erschöpfen, wenn sich die Welle bei abgeschalteter oder unterbrochener externer Energieversorgung über einen längeren Zeitraum schnell dreht und die Leuchteinrichtung in Folge der hohen Drehzahl mit hoher Frequenz blinkt. Durch die Erfindung wird dies vermieden, insbesondere wenn die Betätigung in Abhängigkeit von der Position der Welle erfolgt. Bevorzugt werden nur diejenigen Elemente der Leuchteinrichtung zeitlich begrenzt bzw. positionsabhängig eingeschaltet, die zur Erfassung der Multiturn-Position eingesetzt werden.

Um sicher zu stellen, dass die Multiturn-Position der Welle wenigstens einmal pro Umdrehung bestimmt wird, kann der Positionsgeber in einer Weiterbildung ausgestaltet sein, die Leuchteinrichtung an wenigstens einer vorbestimmten Position der Welle mit Spannung zu versorgen.

Zusätzlich zur Leuchteinrichtung kann in einer Weiterbildung die Sensoranordnung und/oder Erfassungs- und Auswerteelektronik, beispielsweise wenigstens die Auswerteeinheit zur Auswertung der Multiturn-Position und/oder die Steuer-/Auswerteeinheit zur Weiterverarbeitung der Multiturn-Position eingeschaltet werden.

Um den Energieverbrauch im Energiesparmodus weiter zu senken, kann gemäß einer weiteren vorteilhaften Ausgestaltung vorgesehen sein, dass die Leuchteinrichtung und/oder die Sensoranordnung und/oder die Auswerteeinheit und/oder der Mikrocontroller, bevorzugt wenigstens die Leuchteinrichtung, wenigstens zeitweise stromlos sind. Bei dieser Ausgestaltung kann ein nichtflüchtiger Speicher vorgesehen sein, um die Multiturn-Position im stromlosen Zustand zu speichern. Der spannungs- und/oder stromlose Zustand kann aktiv durch eine Steuerung hervorgerufen bzw. geschaltet sein oder passiv bei Wegfall der Stromversorgung eingenommen werden. Der stromlose Zustand kann abhängig von der Position der Welle vorliegen oder geschaltet sein.

Ist eine interne Stromquelle vorhanden, so können die Sensoranordnung und/oder Auswerteeinheit in einer weiteren Ausgestaltung zeitlich begrenzt und/oder positionsabhängig in einen Ruhezustand überführt sein, in dem sie einen Ruhestrom benötigen. Mit dem Einschalten der Energieversorgung der Leuchteinrichtung fahren sie dann aus dem Ruhezustand hoch. Die Aufrechterhaltung des Ruhezustandes im Energiesparmodus benötigt allerdings eine interne Energiequelle.

Um die Energiezufuhr zeitweise einzuschalten, ist gemäß einer bevorzugten Ausgestaltung wenigstens eine Betätigungseinrichtung vorgesehen, die in Wirkverbindung mit der Leuchteinrichtung und/oder optischen Sensoranordnung und/oder Auswerteeinheit steht und ausgestaltet ist, im Energiesparmodus die Leuchteinrichtung und/oder Sensoranordnung und/oder Auswerteeinheit in Abhängigkeit von der Position, insbesondere vorbestimmten Positionen, der Welle einzuschalten. Der Einschaltvorgang aus einem Ruhezustand oder einem stromlosen Zustand in Abhängigkeit von der Position der Welle hat den Vorteil, dass die Erfassung der Multiturn-Position nur dann stattfindet, wenn sie wirklich notwendig ist. Unnötige Messvorgänge werden vermieden. Bei einem drehzahlabhängigen Einschaltvorgang kann dies nicht sichergestellt werden.

Insbesondere kann eine Betätigungseinrichtung eine vorbestimmte Anzahl von Schaltpositionen umfassen. Sind mehrere Schaltpositionen vorgesehen, wird der Multiturn-Messvorgang pro voller Umdrehung der Welle entsprechend mehrfach vorgenommen, so dass die Auflösung der Wellenposition bei abgeschalteter Energieversorgung erhöht wird. Sind wenigstens zwei Schaltpositionen vorhanden, kann eine Richtungsauflösung erfolgen. Für den Fall, dass die Welle auf einer Schaltposition stehen bleibt, sind bevorzugt wenigstens vier Schaltpositionen um den vollen Umfang verteilt vorgesehen, um eine Richtungsauflösung durchführen zu können. Es kann wenigstens eine Codespur, bevorzugt sind zwei, zur Erfassung der Multiturn-Position abgetastet werden.

Der Positionsgeber kann gemäß einer weiteren vorteilhaften Ausgestaltung wenigstens ein relativ zur Betätigungseinrichtung bewegliches Betätigungsorgan aufweisen, das in der Schaltposition auf die Betätigungseinrichtung einwirkend angeordnet ist und den Schaltzustand der Betätigungseinrichtung ändert. Beispielsweise ist die Schaltposition erreicht, wenn der Abstand zwischen dem Betätigungsorgan am kleinsten ist. Um bei der Betätigungseinrichtung mehrere Schaltpositionen zu realisieren, kann eine der Zahl der Schaltpositionen entsprechende Anzahl von Betätigungsorganen vorgesehen sein.

In der Schaltposition kann in einer Weiterbildung die Energiezufuhr zur Leuchteinrichtung und/oder Sensoranordnung und/oder Multiturn-Auswerteeinheit in Abhängigkeit von einer Änderung des Schaltzustands der Betätigungseinrichtung zeitlich begrenzt zugeschaltet werden. Die Abhängigkeit der Zuschaltung der Energiezufuhr nur von einer Änderung des Schaltzustandes und nicht vom Schaltzustand selbst hat den Vorteil, dass bei einer Rückdrehung der Welle über die kurz vorher überfahrene Schaltposition ein erneutes Signal ausgegeben werden kann, ohne dass eine Rückstellung der Betätigungseinrichtung abgewartet werden muss.

Um eine klare Auswertung des von der optischen Sensoranordnung ausgegebenen Signals zu ermöglichen, kann ferner vorgesehen sein, dass die wenigstens eine Schaltposition dem Mittenbereich eines Codeabschnittes einer zur Bestimmung der Multiturn-Position der Welle von der Sensoranordnung überwachten Codespur einer Codescheibe zugeordnet ist. Bei dieser Ausgestaltung werden die Leuchteinrichtung und/oder Sensoranordnung und/oder Auswerteeinheit eingeschaltet, wenn sich die zur Multiturn-Messung eingesetzte LED mitsamt zugehörigem Sensorelement jeweils in der Mitte eines Codeabschnittes, also beispielsweise eines Hell- oder Dunkel-Abschnittes der Codespur, befindet, So kann auch unter Berücksichtigung einer Latenzzeit beim Einschalten der Leuchteinrichtung und/oder Sensoranordnung und/oder Hochfahren der Auswerteeinheit der der Schaltposition zugeordnete Codeabschnitt richtungsunabhängig sicher ausgewertet werden.

Die Leuchteinrichtung bzw. der zu ihrer Steuerung eingesetzte Mikrocontroller kann ausgestaltet sein, bei Erreichen einer Schaltposition die zur Erfassung der Multiturn-Position eingesetzten LEDs wenigstens einmal über einer vorbestimmte Anzahl von Blinkimpulsen, vorzugsweise genau einmal, mit einer vorbestimmten, beispielsweise konstanten Frequenz zu betätigen. Die Frequenz ist dabei so bemessen, dass bei einer anwendungstypischen höchsten Drehgeschwindigkeit die Messung noch innerhalb des der Schaltposition zugeordneten Codeabschnittes stattfinden kann.

Ferner können bei Erreichen der Schaltposition die optische Sensoranordnung und/oder die Auswerteeinheit in einem Zeitfenster so eingeschaltet sein, dass exakt die vorbestimmte Anzahl von Leuchtimpulsen ausgewertet wird. Bei dieser Ausgestaltung wird also die Tätigkeit der Leuchteinrichtung, optischen Sensoranordnung und/oder Auswerteeinheit durch die Betätigungseinrichtung bei Erreichen der Schaltposition über einen begrenzten Zeitraum hinweg getriggert. Der begrenzte Zeitraum ist vorzugsweise so bemessen, dass unter den zu erwartenden Betriebsbedingungen des Positionsgebers die nächste Schaltposition noch nicht erreicht wird.

Das wenigstens eine Betätigungsorgan kann eine Magnetanordnung umfassen. Die Betätigungseinrichtung kann wenigstens eine vom Betätigungsorgan antreibbare Energieerzeugungseinrichtung und/oder wenigstens ein vom Betätigungsorgan betätigbares Schaltmittel umfassen. Das Schaltmittel kann magnetisch betätigbar sein und ausgestaltet sein, seinen Schaltzustand zu ändern, sobald sich die Magnetanordnung innerhalb eines vorbestimmten Abstandes vorbeibewegt. Das magnetisch betätigbare Schaltmittel kann beispielsweise ein Reed-Kontakt sein. Die Verwendung eines Schaltelements, wie einem Reed-Kontakt, kann einen sehr geringen Energieverbrauch und folglich eine Energiequelle in Form beispielsweise einer Batterie erfordern, die jedoch durch ein derartiges Schaltelement kaum belastet wird.

Bei Verwendung einer internen Energieerzeugungseinrichtung, die vorzugsweise nur an der Schaltposition von dem Betätigungsorgan betätigt wird, kann auf eine interne Energiequelle in Form beispielsweise einer Batterie verzichtet werden. Die Energieversorgungseinrichtung kann insbesondere ein ummagnetisierbares Element, beispielsweise, bei einem Mikrogenerator, ein Federelement oder einen Wiegand-Draht, oder ein Piezo-element umfassen.

Die Energieerzeugungseinrichtung erzeugt bei Betätigung eine Energiemenge, insbesondere eine vorbestimmte Mindest-Energiemenge, in dem sie die kinetische Energie der Welle in elektrische Energie umwandelt. Sie versorgt bei Betätigung die Leuchteinrichtung und/oder die Sensoranordnung und/oder die Auswerteeinheit mit Energie. Vorzugsweise ist die Betätigungseinrichtung so ausgelegt, dass die einmalige Zusammenwirkung mit dem Betätigungsorgan an der Schaltposition eine Energiemenge erzeugt, die zur Erzeugung wenigstens eines Impulses durch die Leuchteinrichtung, dessen Erfassung durch die optische Sensoranordnung und anschließenden Auswertung durch die Auswerteeinheit ausreicht. Die Auswerteeinheit kann nach Verarbeitung einer vorbestimmten Anzahl von Impulsen der Leuchteinrichtung, wie sie von der optischen Sensoranordnung erfasst wurden, automatisch in den Schlafmodus übergehen. Überzählige Energie aus der Energieerzeugungseinrichtung kann in einem Energiepuffer zwischengespeichert sein und zumindest unterstützend bei der zeitweisen Spannungsversorgung an der nächsten Schaltposition eingesetzt werden.

Ferner kann die Auswerteeinheit so ausgestaltet sein, dass sie beim Einschalten an jeder Schaltposition neu bootet, der Auswertealgorithmus also stets neu beginnt. Dies hat den Vorteil, dass bei einer Betätigung der Energieerzeugungseinrichtung und/oder des Schaltelements aufgrund eines Fehlers, wie einem Prellen oder einem starken äußeren Magnetfeld, der Mikrocontroller auch dann stets eine neue Messung durchführen kann, wenn die bei der vorangegangenen Messung zur Verfügung gestellte Energie nicht ausreichte, um den Messvorgang zu ende zu führen.

Bei besonders starken äußeren Magnetfeldern, wie sie beispielsweise in der Nähe von magnetisch betätigten Bremsen auftreten können, besteht die Gefahr, dass eine magnetisch betätigte Betätigungseinrichtung nicht zuverlässig funktioniert, wenn das äußere Magnetfeld die Wirkung des Betätigungsorgan kompensiert oder überdeckt. In diesem Fall ist es von Vorteil, dass erfindungsgemäß die Betätigungseinrichtung wenigstens zwei unterschiedlich orientierte magnetische Teilsysteme umfasst und entsprechend jedem Teilsystem ein entsprechend orientiertes magnetisches Betätigungsorgan zugeordnet ist. Durch diese Redundanz wird erreicht, dass bei einem Ausfall eines Teilsystems aufgrund eines starken äußeren Magnetfeldes mit ähnlicher Orientierung das andere, anders orientierte Teilsystem noch funktioniert.

Beide Teilsysteme sind bevorzugt so angeordnet, dass sie gleichzeitig betätigt werden. Bei dieser Maßnahme kann bei einem Ausfall des einen Teilsystems eine Messung an derselben Schaltposition durchgeführt werden.

In einer anderen Weiterbildung kann die erste und die zweite optische Sensoranordnung auf einem Sensorbauteil, insbesondere einem ASIC integriert sein.

Eine andere Weiterbildung besteht darin, dass die Steuer- und Auswerteinheit ebenfalls in dem ASIC integriert sein können. Auf diese Weise kann die Anzahl der Bauteile des Positionsgebers reduziert und die Lebensdauer wesentlich erhöht werden. Gleichzeitig verringert sich der Platzbedarf der Sensoren und der Elektronik.

Schließlich betrifft die Erfindung ein Verfahren zur Bestimmung der Multiturn-Position mittels einer Leuchteinrichtung und einer optischen Sensoranordnung bei Abschalten oder Ausfall der externen Spannungsversorgung, bei dem die Leuchteinrichtung und bevorzugt auch die Sensoranordnung nur zeitweise, insbesondere in Abhängigkeit von der Position der Welle, betrieben werden. Wie oben geschildert, erzeugt die Leuchteinrichtung bei ausgeschalteter oder ausgefallener externer Spannungsversorgung gemäß einer vorteilhaften Ausgestaltung eine vorbestimmte Anzahl von Lichtimpulsen, sobald die Welle eine vorbestimmte Position erreicht. Der Positionsgeber kann dabei die zum Betrieb der Leuchteinrichtung und/oder der Sensoranordnung und/oder Auswerteeinheit benötigte Energie selbst erzeugen.

Weitere Merkmale und Vorteile der vorliegenden Erfindung werden im Weiteren mit Bezug auf die Figuren beschrieben, die lediglich beispielhafte Ausführungsformen veranschaulichen und durchaus nicht den gesamten Umfang der Erfindung darstellen. Es versteht sich, dass die gezeigten Merkmale in anderen Kombinationen, als in den Beispielen beschrieben, im Rahmen der Erfindung Verwendung finden können.

### Kurzbeschreibung der Zeichnungen

Figur 1 illustriert Komponenten eines Beispiels einer erfindungsgemäßen Positionsgebervorrichtung.
Figur 2 zeigt ein Blockschaltbild eines weiteren Beispiels einer erfindungsgemäßen Positionsgebers und einer Auswerteeinheit eines erfindungsgemäßen Positionsgebers.
Figur 3 zeigt eine schematische Darstellung einer weiteren beispielhaften Ausführungsform.

### Beschreibung der Ausführungsformen

Zur Erfassung der Singleturn-Position wird eine optische Abtastung verwendet. Die Erfassung der Multiturn-Position erfolgt ebenfalls optisch. Dies ist neu gegenüber dem in den Druckschriften EP 0 550 794 und EP 1 462 771 beschriebenen Stand der Technik, und dies ermöglicht eine vollkommene Unempfindlichkeit der Positionsmessung gegen magnetische Felder.

Da nun sowohl die Singleturn- als auch die Multiturn-Positionserfassung mit optischen Sensoranordnungen realisiert wird, ergibt sich weiterhin die Möglichkeit, dass beide Sensoranordnungen auf demselben Sensorbaustein angeordnet integriert werden können. Zusätzlich können auf diesen Sensorbaustein auch noch weitere Vorrichtungen, wie beispielsweise Auswerteeinheiten, Schnittstellen, Ausgangstreiber sowie Einheiten für den Betrieb, Ansteuerung und Diagnose der LED integriert werden. Auf diese Weise kann die Anzahl der Bauteile des Positionsgebers massiv reduziert und die Lebensdauer bzw. die MTTF Zeit (mittlere Betriebsdauer bis zum Ausfall, engl. Mean Time To Failure) wesentliche erhöht werden. Gleichzeitig verringert sich der Platzbedarf der Sensoren und der Elektronik.

Die mit der drehbaren Welle fest verbundene Maßverkörperung für die Singleturn-Erfassung kann nun zusätzlich Mittel für die Multiturn-Erfassung beinhalten. Auf diese Weise wird keine separate Maßverkörperung für die Multiturn-Erfassung mehr benötigt, was wiederum die Anzahl der Teile reduziert und die Lebensdauer und Kompaktheit erhöht.

Zur Verringerung des Energieverbrauchs, ist es vorgesehen, dass die Multiturn-Positionserfassung bei Abschalten oder Ausfall der externen Spannungsversorgung nur Impulsmessungen vornimmt. Da die Fotodioden der optischen Sensoranordnung, also die Sensoren im Sinne von EP 1462771, jedoch einen vernachlässigbaren Energieverbrauch besitzen, ist es bevorzugt vorgesehen, diese permanent mit Strom/Spannung zu beaufschlagen. Zu einer effizienten Verringerung des Energieverbrauchs ist es vielmehr zweckmässig, den Betrieb des eigentlichen Aktors mit hohem Energieverbrauch, d.h. den Betrieb der LED in Abhängigkeit vom Betriebszustand mit einer variablen Einschaltdauer, wie beispielsweise periodisch oder gepulst mit einer variablen Frequenz, zu betreiben. Im Gegensatz zu EP 1462771 erfolgt hier also nicht ein periodischer Betrieb des Sensors, sondern des Aktors.

Ist die komplette Auswertung in einer anwendungsspezifischen integrierten Schaltung (engl. application specific integrated circuit, ASIC) vorgesehen, kann auch die Umdrehungserfassung auf die Zeit ohne externe Spannungsversorgung begrenzt werden, und sie kann in der Zeit mit externer Spannungsversorgung von der Positionserfassung innerhalb einer Umdrehung mit übernommen werden, wobei ein ständiger Datenabgleich mit Diagnosemöglichkeit gegeben ist.

Die Energiequelle für den Betrieb des Umdrehungszählers bei Abschalten oder Ausfall der externen Spannungsversorgung kann beispielsweise eine interne oder externe Batterie bzw. ein externer oder interner Akkumulator sein.

Zur weiteren Verringerung des Energieverbrauchs ist es vorgesehen, dass die Multiturn-Positionserfassung bei Abschalten oder Ausfall der externen Spannungsversorgung, also im Energiesparmodus, vorzugsweise nur zeitweise betrieben wird. Insbesondere kann lediglich eine vorbestimmte, vorzugsweise geringe Anzahl von Lichtimpulsen oder Impulse über einen vorbestimmten Zeitraum ausgegeben, erfasst und verarbeitet werden. Dazwischen ruhen die mit der Ausgabe der Lichtimpulse, ihrer Erfassung und Auswertung befassten Einrichtungen. Dadurch kann der Energieverbrauch erheblich reduziert werden. Die optische Sensoranordnung, die Leuchteinrichtung sowie die Auswerteeinrichtung können dabei vorzugsweise in Abhängigkeit von der Drehposition der Welle an bestimmten Schaltpositionen betätigt werden, um sicherzustellen, dass pro Umdrehung der Welle wenigstens einmal die Multiturn-Position erfasst wird.

Wenn die Anzahl der Impulse stark verringert wird, beispielsweise wenn nur ein oder zwei Impulse von der Leuchteinrichtung an bestimmten Drehpositionen oder pro voller Umdrehung ausgegeben werden, verringert sich sowohl der Energiebedarf der Leuchteinrichtung als auch der Energiebedarf für den Betrieb der Sensoranordnung und der Auswerteeinheit auf ein Maß, das auch eine interne Energieerzeugungseinrichtung, die in Form eines Mikrogenerators oder Wiegand-Drahtes magnetisch betätigt wird, zur Spannungsversorgung bereitstellen kann.

Das Einschalten der Leuchteinrichtung und/oder der Sensoranordnung kann auch über einen magnetisch betätigbaren Schalter, wie beispielsweise ein Reed-Kontakt, erfolgen. Dies erfordert allerdings in der Regel eine Energiequelle in Form einer Batterie oder eines Akkus, da der Schalter ständig bestromt sein muss. Der Energieverlust ist dabei sehr gering.

In dieser Ausgestaltung unterscheidet sich der erfindungsgemäße Positionsgeber von den bekannten Positionsgebern dadurch, dass die Energieerzeugungseinrichtung und der magnetische Schalter nicht zur Bestimmung der Multiturn-Position dienen, sondern zur Betätigung der optischen Erfassung der Multiturn-Position.

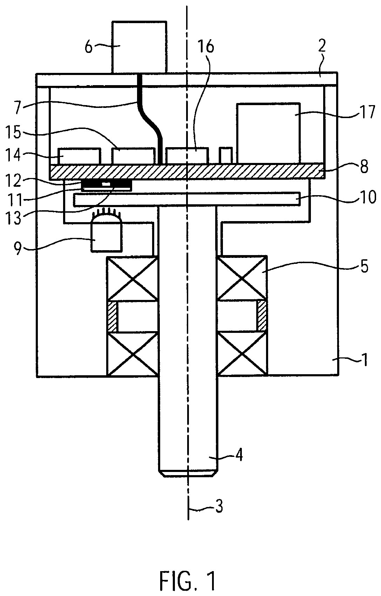

In Figur 1 ist eine erfindungsgemäße Positionsgebervorrichtung gemäß einem Beispiel der vorliegenden Erfindung veranschaulicht.

Die Erfassung der Singleturn-Position innerhalb einer Umdrehung wird darin mit einer Sensoranordnung 12 mit lichtempfindlichen Elementen realisiert, beispielsweise mit Fotodioden oder Fototransistoren, die durch eine optische Maßverkörperung 10 von einer Leuchtdiodenanordnung 9 beleuchtet werden können. Ein Teil der Fotodioden oder Fototransistoren kann zusätzlich auch für die Erfassung der Multiturn-Position verwendet werden.

Beispielhaft ist in dieser Ausführungsform eine erste Auswerteinheit 14 zur Auswertung der Singleturn-Position, eine zweite Auswerteinheit 15 zur Auswertung der Multiturn-Position (Vorverarbeitung der Messsignale) und eine Steuer- und Auswerteinheit 16 z.B. zur Bestimmung eines Gesamtabsolutwerts der Wellenposition (Weiterverarbeitung der Signale von der ersten und der zweiten Auswerteinheit 14, 15) vorgesehen.

Die Leuchtdiodenanordnung 9 wird von der Steuer- und Auswerteinheit 16, beispielsweise einem Mikrokontroller, über Konstantstromquellen je nach Betriebssituation des Positionsgebers nach Bedarf, angesteuert. Auch die Auswertung und Weiterverarbeitung der Singleturn-Position wird von der von der Steuer- und Auswerteinheit 16 je nach Betriebsituation des Positionsgebers nach Bedarf, angesteuert.

Die Auswertung und Weiterverarbeitung der Singleturn-Position wird von der Steuer- und Auswerteinheit 16 ebenfalls je nach Betriebsituation des Positionsgebers nach Bedarf vorgenommen. Bei Anliegen der externen Spannungsversorgung, d.h. im Normalbetrieb kann die Singleturn-Position auch alternativ oder zusätzlich zur Erfassung und Auswertung der Multiturn-Sensoranordnung verwendet werden. Auf diese Weise können Fehler erkannt und kann die Sicherheit der Abtastung erhöht werden.

Die Erfassung der Multiturn-Position und/oder der Drehrichtung, d.h. die Erfassung eines Teils einer Umdrehung (beispielsweise viertel, halben oder ganzen Umdrehungen) kann über eine besondere Ausgestaltung der Maßverkörperung 10 erreicht werden, die den Lichtweg zwischen Dioden und Fotoempfänger entsprechend unterbricht. Hierbei kann die Maßverkörperung 10 verwendet werden, die auch für die Erfassung der Singleturn-Position verwendet wird.

Bei Anliegen der externen Spannungsversorgung, d.h. im Normalbetrieb, kann die Leuchtdiodenanordnung 9, beispielsweise permanent bestromt werden. Sie kann aber auch mit einer variablen Einschaltdauer, wie beispielsweise periodisch oder gepulst mit einer variablen Frequenz, betrieben werden. Sie kann insbesondere zeitweise auch unbestromt sein.

Bei Abschalten oder Ausfall der externen Spannungsversorgung d.h. im Energiesparbetrieb, kann die Leuchtdiodenanordnung 9 mit einer variablen Einschaltdauer, wie beispielsweise periodisch oder gepulst mit einer variablen Frequenz, betrieben werden, die reduziert ist gegenüber dem Normalbetrieb. Häufigkeit und Dauer der Bestromung kann mit der ersten erkannten Signaländerung erhöht werden.

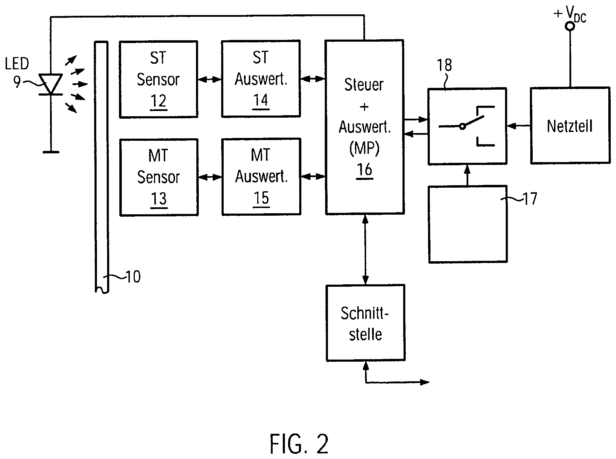

Eine besonders vorteilhafte Ausführung ist es, wenn die für die Erfassung der Umdrehungen notwendigen Strukturen mit auf der Maßverkörperung 10 angeordnet sind und so auf eine zusätzliche Maßverkörperung oder eine Unterbrecherscheibe (siehe Figur 2) verzichtet werden kann.

Bei Abschalten oder Ausfall der externen Spannungsversorgung wird die Umdrehungszählung mit einer Energiequelle versorgt. Diese Energiequelle 17 kann eine Batterie oder ein Akkumulator sein. Die Energiequelle 17 kann in den Positionsgeber integriert oder außerhalb des Gehäuses des Positionsgebers angeordnet sein.

Die Ansteuerung der LED, beispielsweise Frequenz, Häufigkeit oder Dauer des Einschaltens, kann abhängen von Betriebsparametern des Positionsgebers, beispielsweise von der Geschwindigkeit und/oder der Beschleunigung der Bewegung der Welle. Dazu kann eine Vorrichtung vorhanden sein, die es erlaubt, auch im Energiesparmodus die Geschwindigkeit und/oder die Beschleunigung zu ermitteln. Zusätzlich können mehrere Betriebsarten beispielsweise mehrere Betriebsfrequenzen für die Ansteuerung der LED vorgesehen sein. Auf diese Weise kann ein besonders vorteilhafter Energiesparmodus realisiert werden, da sich die Welle bei Abschalten oder Ausfall der externen Spannungsversorgung normalerweise nicht oder nur mit kleiner Geschwindigkeit und Beschleunigung dreht.

Figur 2 zeigt ein Blockschaltbild eines weiteren Beispiels einer Positionsgebervorrichtung und einer Auswerteeinheit eines erfindungsgemäßen Positionsgebers. Der Positionsgeber dient der Absolutwertpositionserfassung einer drehbar gelagerten Welle, wobei der Positionsgeber eine Glascodescheibe 10 in Kombination mit einer LED 9 und einem Singleturn-Sensor 12 zur Erfassung der Position innerhalb einer vollständigen Umdrehung, einen Multiturn-Sensor 13 zur Erfassung der Anzahl der Umdrehungen und der Drehrichtung, eine erste Auswerteinheit 14 zur Auswertung der Singleturn-Position, eine zweite Auswerteinheit 15 zur Auswertung der Multiturn-Position und eine Steuer- und Auswerteinheit 16. Letztere kann beispielsweise einen Gesamtabsolutwert aus der Singleturn- und der Multiturn-Position bilden und über eine Schnittstelle ausgeben. Weiterhin kann die Steuerund Auswerteinheit 16 das Ein- und Ausschalten der LED 9 steuern, z.B für kurzzeitige Messintervalle (Impulsmessung) im Falle eines Netzspannungsausfalls (wie bereits im Zusammenhang mit Fig. 1 beschrieben), wobei die Steuer- und Auswerteinheit 16 dann durch die Energiequelle 17 (Batterie oder Akku) mit Strom/Spannung versorgt wird.

Ferner zeigt Fig. 2 eine Einrichtung 18 zum Überwachen einer externen Spannungsversorgung und zur Umschaltung auf die Energiequelle 17 bei Abschalten oder Ausfall der externen Spannungsversorgung.

Eine zusätzliche, optimierte Erweiterung des Systems kann durch eine Integration der Fotoempfänger in einen Opto-ASIC erfolgen. Durch die höhere, erzielbare Verarbeitungsgeschwindigkeit im Opto-ASIC kann der Stromverbrauch im Batteriebetrieb noch weiter reduziert und die zulässige Grenzfrequenz des Abtastsystems erhöht werden.

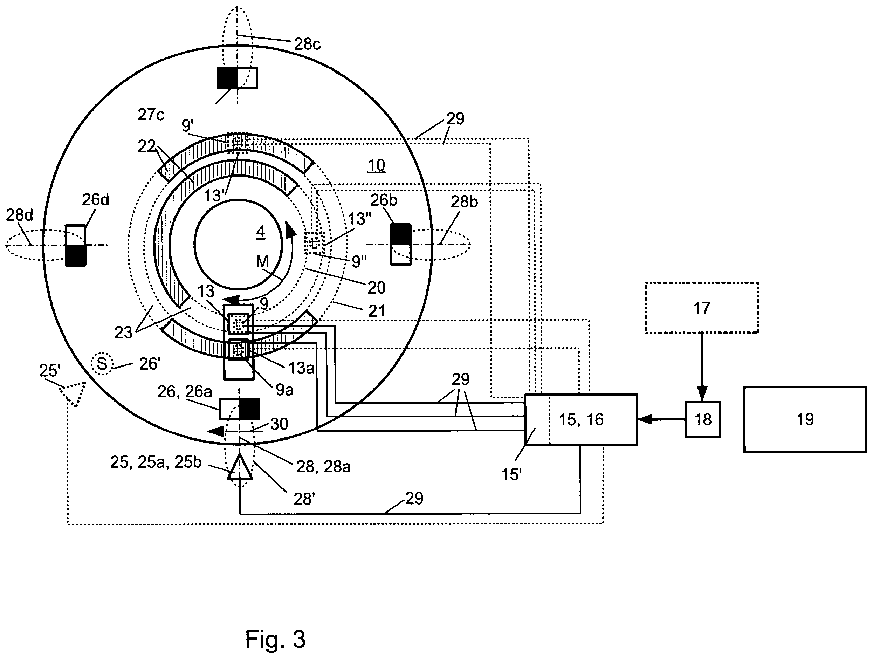

Figur 3 zeigt eine schematische Darstellung einer weiteren Ausführungsform eines erfindungsgemäßen Positionsgebers. Die Darstellung der Figur 3 beschränkt sich dabei auf die im Energiesparmodus des Positionsgebers 1 aktiven bzw. aktivierbaren Elemente. Im Übrigen ist auf die Beschreibung der Ausführungsformen der Figuren 1 und 2 verwiesen. Im Energiesparmodus können die zur Erfassung der Multiturn-Positionen eingesetzten Elemente, die Leuchteinrichtung 9, die Sensoranordnung 13 und/oder die Auswerteeinheit 15 über andere, separate Pfade (in Figur 3 als gestrichelte Verbindungen zwischen Leuchteinrichtung 9 und Sensoranordnung 13 sowie Auswerteeinheit 15, 16 dargestellt) miteinander in einer anderen Wirkverbindung stehen als im Normalmodus. Die Schaltungen für den Energiesparmodus weisen bevorzugt einen besonders geringen Energieverbrauch auf. Die Auswertung der Absolutposition im Normalmodus und die Auswertung der Multiturn-Position im Energiesparmodus kann folglich über zwei unterschiedliche Pfa-de erfolgen.

Wie oben ausgeführt ist, wird der Energiesparmodus von der Einrichtung 18 bei Ausfall oder Abschalten einer externen Energiequelle 19 ausgelöst.

Zur Erfassung der Multiturn-Position wird im Energiesparmodus die Leuchteinrichtung 9 nur zeitweise bzw. zeitlich begrenzt mit Spannung versorgt, so dass sie nur eine begrenzte, vorzugsweise vorbestimmte Anzahl von Impulsen erzeugt. Dabei werden nur diejenigen LEDs betätigt, die für die Erfassung der Multiturn-Position eingesetzt werden. Die Anzahl der Impulse pro Impulsfolge ist so bemessen, dass sicher eine Erfassung der Multiturn-Position stattfindet. Hierzu kann ein einzelner Impuls ausreichen. Der Leuchteinrichtung 9 bezüglich der Maßverkörperung gegenüber liegt die zur Multiturn-Erfassung eingesetzte Sensoranordnung 13, die Teil eine integrierten Schaltkreises, beispielsweise eines ASIC sein.

Die Maßverkörperung weist mehrere Codespuren 20, 21 auf, die in Codeabschnitte 22, 23 unterteilt sind. Die Codespuren sind konzentrisch angeordnet. Die Codeabschnitte 22, 23 sind aufeinanderfolgende helle oder dunkle Segmente einer Codespur. Beim Ausführungsbeispiel der Figur 3 wird die innerste Codespur 20 zur Multiturn-Messung eingesetzt. Zusätzlich kann auch eine weitere, äußere Codespur 21 zur Multiturn-Messung verwendet werden.

Damit pro voller Umdrehung der Maßverkörperung 10 und damit der Welle 4 auch sicher wenigstens einmal die Multiturn-Position erfasst wird, können die Leuchteinrichtung 9 und, soweit sie nicht von der internen Energiequelle 17 dauernd bestromt ist, vorzugsweise auch die Sensoranordnung 13 in Abhängigkeit von der Position der Welle mit Strom versorgt werden. Die Auswerteeinheit 15 für die Multiturn-Position kann dabei ebenfalls dauernd bestromt sein oder aber nur dann bestromt sein, wenn auch die Leuchteinrichtung 9 und die Sensoranordnung 13 mit Strom versorgt sind. Die Regelung der Energiezufuhr kann von einer der Auswerteeinheiten 15, 16 durchgeführt werden. Das Einschalten der Leuchteinrichtung 9 kann durch wenigstens eine Betätigungseinrichtung 25 gesteuert sein.

Der Drehgeber kann ferner wenigstens ein Betätigungsorgan 26 aufweisen. In Figur 3 sind lediglich beispielhaft vier Betätigungsbetätigungsorgane 26a, 26b, 26c, 26d gezeigt. Die Betätigungsorgane 26, 26 a-d können relativ beweglich zu der Betätigungseinrichtung 25 angeordnet sein. Insbesondere können sich die Betätigungsorgane 26, 26a-d in Abhängigkeit von der Position der Welle 4 bewegen, insbesondere mit der Welle 4 drehstarr verbunden sein. Die Betätigungseinrichtung 25 ist dann bevorzugt stationär. Alternativ können auch die Betätigungseinrichtung 25 drehstarr mit der Welle verbunden und das wenigstens eine Betätigungsorgan 26 stationär oder ein Betätigungsorgan 26 und mehrere Betätigungseinrichtungen 25 vorhanden sein.

Der Messvorgang zur Erfassung der Multiturn-Position wird an wenigstens einer vorbestimmten (Singleturn-)Position der Welle, der Schaltposition 28, durchgeführt. An der Schaltposition wirkt das Betätigungsorgan 26, 26a-d auf die Betätigungseinrichtung 25 ein und ändert dann den Schaltzustand der Betätigungseinrichtung 25. Die Schaltposition 28 ist beispielsweise erreicht, wenn der Abstand in einem Bereich 28' zwischen der Betätigungseinrichtung 25 und dem Betätigungsorgan 26, 26a-d einen bestimmten Grenzwert unterschreitet.

In Figur 3 sind vier Schaltpositionen 28a, 28b, 28c, 28d pro voller Umdrehung vorgesehen, die, wie gezeigt, um 90° zueinander versetzt liegen können. Jeder Schaltposition ist ein Betätigungsorgan zugeordnet. Durch jedes Betätigungsorgan ist eine Schaltposition festgelegt. Die wenigstens eine Schaltposition 28 ist bevorzugt im Mittenbereich M eines Codeabschnittes 23 angeordnet, in dem der der Schaltposition zugeordnete Messvorgang durchgeführt wird.

Die Sensoranordnung 13 kann ein weiteres Sensorelement 13a umfassen, das gleichzeitig im Normalbetrieb zur Erfassung der Singleturn-Position dient, oder ein separates Multiturn-Sensorelement 13a, 13'. Das zweite Sensorelement 13' mit zugeordneter LED 9' ist einer weiteren Codespur 21 zugeordnet, so dass mit den zwei Signalen eine Quadrantenbestimmung erfolgt.

Alternativ kann auf derselben Codespur 20 zur Richtungserkennung ein zweites Sensorelement 13" um weniger als 180°, vorzugsweise um etwa 90°, versetzt zum ersten Sensorelement beim Bezugszeichen 13 mit zugeordneter LED 9" vorhanden sein.

Die Betätigungseinrichtung 25 steht in einer Wirkverbindung 29, beispielsweise über elektrische Signalleitungen und zwischengeschaltete elektrische oder elektronische Bauelemente, mit der Leuchteinrichtung 9 und/oder der optischen Sensoranordnung 13 und/oder der Auswerteeinheit 15. Dieser Verbindungsweg kann sich von Verbindungen 29' für den Normalmodus unterscheiden. In Abhängigkeit vom Schaltzustand der Betätigungseinrichtung 25 kann die Leuchteinrichtung 9 sowie gegebenenfalls auch die Sensoranordnung 13 und die Auswerteeinheit 15 mit der internen Energiequelle 17 verbunden werden. Im Energiesparmodus kann nur ein spezieller Abschnitt 15' der Auswerteeinheit 15 aktiv sein bzw. aktiviert werden. In diesem Abschnitt sind nur diejenigen Vorgänge hinterlegt, die zur gegebenenfalls richtungsauflösenden Erfassung der Multiturn-Positionen notwendig sind. Der Abschnitt 15' kann mit Bauelementen versehen sein, die im Betrieb besonders wenig Energie verbrauchen. Als Abschnitt 15' kann somit der Multiturn-Pfad der Figur 2 implementiert sein. Alternativ kann der Abschnitt 15' die zur Singleturn-Erfassung im Normalbetrieb eingesetzten Bauelemente, oder einen Teil hiervon, umfassen.

Das Betätigungsorgan 26, wie auch eines der Betätigungsorgane 26, 26-a-d kann eine Magnetanordnung umfassen. Die Betätigungseinrichtung 25 kann einen magnetisch betätigbaren Schalter 25a, beispielsweise einen Reed-Kontakt, umfassen. Bewegt sich in der Schaltposition 28 die Magnetanordnung an dem Schalter vorbei, so ändert sich dessen Schaltzustand und Energie fließt von der internen Energiequelle zu der Leuchteinrichtung 9, der Sensoreinrichtung 13 und den Auswerte-/Steuereinheiten 15, 16.

Sämtliche für die Multiturn-Erfassung benötigten Leuchtmittel einer Leuchteinrichtung 9 werden jeweils gleichzeitig mit Spannung versorgt, geben also gleichzeitig die vorbestimmte Anzahl von Leuchtimpulsen aus. Gleiches gilt für die diesen Leuchtmitteln zugeordneten Sensorelemente der Sensoranordnung 13. Die Singleturn-Sensoren 12 und die ihnen zugeordneten Leuchtmittel sind im Energiesparmodus abgeschaltet.

Wenn sich der Schaltzustand der Betätigungseinrichtung 25 ändert, schaltet beispielsweise der Mikrocontroller 16 die Spannungsversorgung für die Leuchteinrichtung 9, die Sensoranordnung 13 und die Auswerteeinheit 15 für einen bestimmten Zeitraum ein. Dieser Zeitraum ist so bemessen, dass die Auswerteeinheit 15 zuverlässig die Auswertung der von der Sensoranordnung 13 erfassten Impulse abschließen kann. Am Ende der Auswertung kann die Auswerteeinheit ein Signal ausgeben, welches die Spannungsversorgung ausschaltet und gegebenenfalls den Schaltzustand der Betätigungseinrichtung zurückstellt.

Weist der Positionsgeber 1 keine interne Energiequelle 17 auf, so kann die Betätigungseinrichtung 25 eine Energieerzeugungseinrichtung 25b umfassen, die in der Schaltposition 28 aufgrund der Einwirkung des Betätigungsorgans 26, 26a-d zumindest kurzzeitig Energie erzeugt. Die Energieerzeugungseinrichtung ist so ausgestaltet, dass bei ihrer einmaligen Betätigung die Leuchteinrichtung 9, die Sensoranordnung 13 und die Auswerteeinheit 15 mit einer Energiemenge versorgt werden, die ausreichend ist, wenigstens einen Lichtimpuls an den zur Multiturn-Erfassung eingesetzten LEDs der Leuchtanordnung 9 zu erzeugen, diesen wenigstens einen Lichtimpuls durch wenigstens einen Sensor der Sensoranordnung 13 zu erfassen, durch die Auswerteeinheit 15 auszuwerten und das Ergebnis in einem nichtflüchtigen Speicher abzulegen.

Die Auswerteeinheit 15 ist vorzugsweise so ausgestaltet, dass sie bei jeder erneuten Energiezufuhr neu startet. Dadurch hat es keine Auswirkungen, wenn aufgrund eines durch eine äußere Störung erzeugten Energieimpulses oder einem Prellen eines Schalters die Auswerteeinheit mit der Programmausführung beginnt, diese jedoch nicht beenden kann, weil die im Energieimpuls enthaltene Energie nicht ausreichend war.

Die Energieerzeugungseinrichtung 25b ist vorzugsweise magnetbetätigt ausgestaltet, so dass das Betätigungsorgan 26 eine Magnetanordnung umfasst. Als Energieerzeugungseinrichtung 25b kann ein Wiegand-Draht oder ein Mikrogenerator mit einem Federmechanismus oder einem Piezo-Element zum Einsatz gelangen.

Anstelle einer beweglichen Magnetanordnung kann auch gegenüber einem Schaltelement oder einer Energieversorgungseinrichtung stationär eine Magnetanordnung angeordnet sein. Das Betätigungsorgan 26 kann dabei ein zwischen Magnetanordnung und Schaltelement bzw. Energieversorgungseinrichtung bewegtes Abschirmelement, beispielsweise ein Abschirmblech, umfassen.

Gemäß der Erfindung wird die Störungsanfälligkeit der Betätigungseinrichtung 25 verringert und damit zuverlässiger ein Messimpuls oder eine Messimpulsfolge an der Schaltposition 28 ausgelöst werden, wenn die Betätigungseinrichtung 25 redundante Teilsysteme aufweist, die unterschiedlich orientierte Magnetanordnungen aufweisen. Die unterschiedlichen Teilsysteme können dabei einer einzelnen Schaltposition zugeordnet sein, so dass sie an derselben Schaltposition 28 eine Messung auslösen. Die unterschiedliche Orientierung der Magnetanordnungen der Teilsysteme hat zur Folge, dass bei einem starken externen Magnetfeld 30, welches das Magnetfeld einer einzelnen Magnetanordnung, in Fig. 3 des Betätigungsorgans 26 eines Teilsystems kompensieren würde, während das andere Teilsystem funktionsfähig bleibt. In Figur 3 ist ein solches Teilsystem beim Bezugszeichen 25' dargestellt, wobei die Betätigungseinrichtung 25 das andere Teilsystem darstellt. Dem Teilsystem 25' ist ein Betätigungsorgan 26' zugeordnet, das eine gegenüber dem Betätigungsorgan unterschiedliche magnetische Orientierung aufweist. Wenn das bei 25 dargestellte Teilsystem aufgrund des Magnetfeldes 30 nicht oder nur mit Störungen funktioniert, arbeitet das Teilsystem 25' problemlos.

Der mit Bezug auf Figur 3 beschriebene Positionsgeber kann anstelle der sowohl für die Multiturn- als auch für die Singleturn-Auswertung verwendeten innersten Codespur 20 auch eine separate Codespur oder Codescheibe mit einer separaten Leuchteinrichtung 9 und Sensoranordnung 13 nur für die Multiturn-Auswertung aufweisen. Die Betätigungseinrichtung 25 und das Betätigungsorgan 26, 26a-d kann dann an dieser separaten Codescheibe angeordnet sein.

Der Vorteil der Verwendung einer Betätigungseinrichtung 25 mit einem magnetischen Schalter und/oder einer Energieerzeugungseinrichtung zusammen mit einer optischen Auswertung der Multitum-Position besteht darin, dass magnetische Störimpulse im Energiesparmodus keine Fehlmessung auslösen können, denn die Energie von derartigen Störimpulsen reicht nicht aus, um die Leuchteinrichtung 9 zu betätigen und den Leuchtimpuls über die Sensoranordnung 13 zu erfassen und auszuwerten. Selbst wenn die Energie eines Störimpulses zur Versorgung der Leuchteinrichtung und der Sensoranordnung und der Auswerteeinheit ausreicht, wird dadurch lediglich ein Messvorgang an einer unbestimmten Position ausgelöst, der spätestens mit der höchsten korrekten Messung zu einem korrekten Zählergebnis führt. Eine weitere Fehlerbegrenzung findet dadurch statt, dass die Messung stets an einer vorbestimmten Schaltposition 28 erfolgt, so dass ein bestimmtes Signalmuster von der Sensoranordnung 13 empfangen werden muss. Wird dieses Signalmuster nicht empfangen, liegt ein Fehler vor. Bei der Figur 3 entsteht dieses Signalmuster durch die Verdunkelung des Sensors 13', während der Sensor 13 den oder die Lichtimpulse der LED empfängt.

## Patentansprüche

1. Positionsgeber zur Erfassung der Position einer um eine Rotationsachse (3) drehbaren Welle (4), mit einer Leuchteinrichtung (9) und einer optischen Sensoranordnung (13) zur Erfassung der Multiturn-Position der Welle, wobei der Positionsgeber wenigstens einen Energiesparmodus bei Abschalten oder Ausfall der externen Spannungsversorgung umfasst und ausgestaltet ist, im Energiesparmodus die Leuchteinrichtung zeitweise mit Spannung zu versorgen und wenigstens eine Betätigungseinrichtung (25) vorgesehen ist, die in Wirkverbindung mit der Leuchteinrichtung (9) und/oder optischen Sensoranordnung (13) und/oder Auswerteeinheit (15) steht und ausgestaltet ist, im Energiesparmodus die Leuchteinrichtung und/oder Sensoranordnung und/oder Auswerteeinheit in Abhängigkeit von der Position der Welle (4) einzuschalten, **dadurch gekennzeichnet, dass** die Betätigungseinrichtung wenigstens zwei unterschiedlich orientierte magnetische Teilsysteme umfasst und entsprechend jedem Teilsystem ein entsprechend orientiertes magnetisches Betätigungsorgan zugeordnet ist.

2. Positionsgeber nach Anspruch 1, **dadurch gekennzeichnet, dass** der Positionsgeber ausgestaltet ist, im Energiesparmodus die Sensoranordnung und/oder eine Auswerteinheit (15) zur Auswertung der Multiturn-Position und/oder einen Mikrocontroller (16) zeitlich begrenzt mit Spannung zu versorgen.

3. Positionsgeber nach Anspruch 1 oder 2, **dadurch gekennzeichnet, dass** im Energiesparmodus die Leuchteinrichtung (9) und/oder Sensoranordnung (13) und/oder Auswerteeinheit (15) und/oder Mikrocontroller (16) wenigstens zeitweise stromlos sind.

4. Positionsgeber nach einem der Ansprüche 1 bis 3, **dadurch gekennzeichnet, dass** der Positionsgeber ausgestaltet ist, im Energiesparmodus die Leuchteinrichtung (9), Sensoranordnung (13) und/oder Auswerteinheit (15) zur Auswertung der Multiturn-Position und/oder einen Mikrocontroller (16) in Abhängigkeit von der Position der Welle mit Spannung zu versorgen.

5. Positionsgeber nach Anspruch 4, **dadurch gekennzeichnet, dass** wenigstens ein relativ zur Betätigungseinrichtung (25) bewegliches Betätigungsorgan (26, 26a-d) vorgesehen ist, das in wenigstens einer vorbestimmten Schaltposition (28, 28a-d) der Welle auf die Betätigungseinrichtung (25) einwirkt und deren Schaltzustand ändert.

6. Positionsgeber nach Anspruch 5, **dadurch gekennzeichnet, dass** die Schaltposition (28, 28a-d) einem Mittenbereich (M) eines Codeabschnittes (23) einer zur Bestimmung der Multiturn-Position der Welle von der Sensoranordnung (13) überwachten Codespur (20) einer Maßverkörperung (10) zugeordnet ist.

7. Positionsgeber nach einem der Ansprüche 5 bis 6, **dadurch gekennzeichnet, dass** das eine Betätigungsorgan (26, 26a-d) eine Magnetanordnung und die Betätigungseinrichtung (25, 25a, 25b, 25') wenigstens ein magnetisch betätigbares Schaltelement umfasst.

8. Positionsgeber nach einem der Ansprüche 4 bis 7, **dadurch gekennzeichnet, dass** die Betätigungseinrichtung wenigstens eine von einer Magnetanordnung antreibbare Energieerzeugungseinrichtung aufweist, die die Leuchteinrichtung und/oder die Sensoranordnung an der Schaltposition mit Energie versorgt.

9. Positionsgeber nach Anspruch 8, **dadurch gekennzeichnet, dass** die Energieerzeugung ein ummagnetisierbares Element umfasst.

10. Positionsgeber nach einem der Ansprüche 1 bis 9, **dadurch gekennzeichnet, dass** ein Mikrokontroller (16) vorgesehen ist, durch den im Energiesparmodus eine von der Leuchteinrichtung (9) in Abhängigkeit von der Position der Welle (4) ausgegebene Anzahl von Blinkimpulsen begrenzt ist.

11. Positionsgeber nach einem der Ansprüche 1 bis 10, **dadurch gekennzeichnet, dass** der Mikrokontroller (16) im Energiesparmodus einen Schlafmodus aufweist, in den er nach Verarbeitung wenigstens eines, vorzugsweise genau eines Lichtimpulses der Leuchteinrichtung überführt ist.

## Claims

1. Position encoder for the detection of the position of a shaft (4) rotatable about a rotation axis (3), with a lighting device (9) and an optical sensor array (13) for the detection of the multi-turn position of the shaft, whereby the position encoder comprises at least one energy-saving mode in the event of a shut-down or failure of the external power supply and is designed to supply the lighting device with power periodically in the energy-saving mode, and at least one actuating device (25) is provided, which is in operative connection with the lighting device (9) and/or optical sensor array (13) and/or evaluation unit (15) and is designed to switch on the lighting device and/or sensor array and/or evaluation unit in energy-saving mode depending on the position of the shaft (4), **characterized in that** the actuating device comprises at least two differently oriented magnetic part-systems and that a suitably oriented magnetic actuating organ is assigned accordingly to each part-system.

2. Position encoder in accordance with Claim 1, **characterized in that** the position encoder is designed to supply the sensor array and/or an evaluation unit (15) for evaluating the multi-turn position and/or a micro-controller (16) with power for a limited period of time in energy-saving mode.

3. Position encoder in accordance with Claim 1 or 2, **characterized in that** the lighting device (9) and/or sensor array (13) and/or evaluation unit (15) and/or micro-controller (16) have zero current, at least for a limited period of time, in energy-saving mode.

4. Position encoder in accordance with Claims 1 to 3, **characterized in that** the position encoder is designed to supply the lighting device (9), sensor array (13) and/or evaluation unit (15) for evaluating the multi-turn position and/or a micro-controller (16) with power, depending on the position of the shaft, in energy-saving mode.

5. Position encoder in accordance with Claim 4, **characterized in that** at least one actuating organ (26, 26a-d) which is movable in relation to the actuating device (25) is provided and which acts on the actuating device (25) in at least one predetermined switching position (28, 28a-d) of the shaft and changes its switching status.

6. Position encoder in accordance with Claim 5, **characterized in that** the switching position (28, 28a-d) is assigned to a central area (M) of a code section (23) of the code track (20) of a dimensional scale (10), said track being monitored to determine the multi-turn position of the shaft of the sensor array (13).

7. Position encoder in accordance with one of the Claims 5 to 6, **characterized in that** one actuating organ (26, 26a-d) comprises an arrangement of magnets and the actuating device (25, 25a, 25b, 25') at least one switching element that can be actuated magnetically.

8. Position encoder in accordance with one of the Claims 4 to 7, **characterized in that** the actuating device has at least one energy generation device that can be driven by an arrangement of magnets, said device supplying the lighting device and/or the sensor array with energy at the switching position.

9. Position encoder in accordance with Claim 8, **characterized in that** the energy generation device comprises an element that can be remagnetized.

10. Position encoder in accordance with one of the Claims 1 to 9, **characterized in that** a micro-controller (16) is provided, through which the number of flashing impulses emitted in energy-saving mode by the lighting device (9) depending on the position of the shaft (4) is limited.

11. Position encoder in accordance with one of the Claims 1 to 10, **characterized in that** the micro-controller (16) in energy-saving mode has a sleep mode to which it is set after processing at least one, preferably exactly one light impulse of the lighting device.

## Revendications

1. Codeur de position permettant de détecter la position d'un axe (4) pouvant se mettre en rotation autour d'un axe de rotation (3), avec un dispositif d'éclairage (9) et un agencement de capteur optique (13) permettant de détecter la position multitour de l'axe, le codeur de position comprenant au moins un mode d'économie d'énergie en cas de coupure ou de défaillance de l'alimentation externe et étant conçu pour alimenter temporairement en électricité le dispositif d'éclairage dans le mode d'économie d'énergie et au moins un dispositif d'actionnement (25) étant prévu, lequel est en liaison active avec le dispositif d'éclairage (9) et/ou l'agencement de capteur optique (13) et/ou l'unité d'évaluation (15) et est conçu pour activer dans le mode d'économie d'énergie le dispositif d'éclairage et/ou l'agencement de capteur et/ou l'unité d'évaluation en fonction de la position de l'axe (4), **caractérisé en ce que** le dispositif d'actionnement comprend au moins deux sous-systèmes magnétiques à orientation différente et, par conséquent, un organe d'actionnement magnétique à orientation correspondante est affecté à chaque sous-système.

2. Codeur de position selon la revendication 1, **caractérisé en ce que** le codeur de position est conçu pour alimenter en électricité de manière limitée dans le temps l'agencement de capteur et/ou une unité d'évaluation (15) pour évaluer la position multitour et/ou un microcontrôleur (16) dans le mode d'économie d'énergie.

3. Codeur de position selon la revendication 1 ou 2, **caractérisé en ce que,** dans le mode d'économie d'énergie, le dispositif d'éclairage (9) et/ou l'agencement de capteur (13) et/ou l'unité d'évaluation (15) et/ou le microcontrôleur (16) sont hors tension au moins temporairement.

4. Codeur de position selon l'une des revendications 1 à 3, **caractérisé en ce que** le codeur de position est conçu pour alimenter en électricité le dispositif d'éclairage (9), l'agencement de capteur (13) et/ou l'unité d'évaluation (15) pour évaluer la position multitour et/ou un microcontrôleur (16) en fonction de la position de l'axe dans le mode d'économie d'énergie.

5. Codeur de position selon la revendication 4, **caractérisé en ce qu**'au moins un organe d'actionnement (26, 26a-d) mobile par rapport au dispositif d'actionnement (25) est prévu, lequel agit sur le dispositif d'actionnement (25) et modifie son état de commutation dans au moins une position de commutation prédéfinie (28, 28ad).

6. Codeur de position selon la revendication 5, **caractérisé en ce que** la position de commutation (28, 28a-d) est attribuée à une zone centrale (M) d'une section de code (23) d'une piste de codage (20) d'un étalon de mesure (10) contrôlée par l'agencement de capteur (13) pour déterminer la position multitour de l'axe.

7. Codeur de position selon l'une des revendications 5 à 6, **caractérisé en ce que** l'organe d'actionnement (26, 26a-d) comprend un agencement d'aimant et le dispositif d'actionnement (25, 25a, 25b, 25') comprend au moins un élément de commutation à actionnement magnétique.

8. Codeur de position selon l'une des revendications 4 à 7, **caractérisé en ce que** le dispositif d'actionnement présente au moins un dispositif générateur d'énergie actionnable par un agencement d'aimant, ledit dispositif générateur d'énergie alimentant en énergie le dispositif d'éclairage et/ou l'agencement de capteur dans la position de commutation.

9. Codeur de position selon la revendication 8, **caractérisé en ce que** la génération d'énergie comprend un élément pouvant faire l'objet d'une inversion magnétique.

10. Codeur de position selon l'une des revendications 1 à 9, **caractérisé en ce qu**'un microcontrôleur (16) est prévu, lequel limite dans le mode d'économie d'énergie un nombre d'impulsions de clignotement fournies par le dispositif d'éclairage (9) en fonction de la position de l'axe (4).

11. Codeur de position selon l'une des revendications 1 à 10, **caractérisé en ce que** le microcontrôleur (16) présente dans le mode d'économie d'énergie un mode veille, dans lequel il bascule après traitement d'au moins une, de préférence exactement une impulsion de lumière du dispositif d'éclairage.
